Europäisches Patentamt

European Patent Office

Office européen des brevets

(19)

(11) **EP 0 530 401 B1**

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int Cl.⁶: **G05B 19/425**

(21) Anmeldenummer: **91115101.7**

(22) Anmeldetag: **06.09.1991**

(54) **Verfahren zum Auslösen von positionsbezogenen Schaltvorgängen während eines von einem Roboter oder einer Werkzeugmaschine ausgeführten Bearbeitungsvorganges**

Method to start position dependant operations during machining with a robot or machine tool

Méthode de déclenchement d'opérations en fonction de la position pendant l'usinage par un robot ou une machine-outil

(84) Benannte Vertragsstaaten:
**CH DE FR IT LI NL SE**

(43) Veröffentlichungstag der Anmeldung:
**10.03.1993 Patentblatt 1993/10**

(73) Patentinhaber:
- **SIEMENS AKTIENGESELLSCHAFT**
  **80333 München (DE)**
- **KUKA Schweissanlagen & Roboter GmbH**
  **D-86165 Augsburg (DE)**

(72) Erfinder:
- **Olomski, Jürgen, Dr.**
  **W-8522 Herzogenaurach (DE)**
- **Zäh, Manfred, Dipl.-Ing.**
  **W-8550 Forchheim (DE)**
- **Settele, Norbert**
  **W-8891 Petersdorf/Willprechtszell (DE)**
- **Meier, Christoph, Dr.**
  **W-8551 Heroldsbach (DE)**

(74) Vertreter: **Fuchs, Franz-Josef, Dr.-Ing. et al**
**Postfach 22 13 17**
**80503 München (DE)**

(56) Entgegenhaltungen:
**DE-A- 2 334 455          DE-A- 4 101 422**

- **PATENT ABSTRACTS OF JAPAN vol. 9, no. 250 (P-394)(1973) 8. Oktober 1985 & JP-A-60 101 606 (HITACHI) 5.Juni 1985**

**Beschreibung**

Verfahren zum Auslösen von positionsbezogenen Schaltvorgängen während eines von einem Roboter oder einer Werkzeugmaschine ausgeführten Bearbeitungsvorganges

Bei der Bearbeitung von Werkstücken durch einen Roboter, eine komplexe Werkzeugmaschine oder ein Bearbeitungszentrum sind u.a. auch bewegungsbezogene Schaltvorgänge auszuführen. Solche Schaltvorgänge sind beispielsweise das Schließen oder Öffnen einer Schweißzange beim Punktschweißen, das Ein-Ausschalten des Schweißstromes beim Bahnschweißen mit einem Lichtbogen oder Laser oder das Zu- bzw. Abschalten des Volumenstromes eines Werkzeuges (Klebepistole etc.) für Klebe- und Abdichtarbeiten. Diese Schaltvorgänge sind an bestimmten Positionen der vom Werkzeug ausgeführten Bewegungsbahn durchzuführen. Der Begriff "Position" umfaßt dabei nicht nur den Raumpunkt, an dem sich ein Werkzeug befindet, sondern auch die Ausrichtung dieses Werkzeugs an diesem Raumpunkt. Bei einem Roboter wird diese Ausrichtung gewöhnlich mit dem Begriff "Orientierung" beschrieben.

Wenn die Bewegungsbahn für das Werkzeug des Roboters oder der Werkzeugmaschine oder eines sonstigen numerisch gesteuerten Systems exakt durch Koordinatenwerte, beispielsweise durch kartesische Koordinaten, angegeben wird, läßt sich auch die Position, an dem der Schaltvorgang eingeleitet werden soll, in diesen Koordinaten angeben. Die Vorgabe in Koordinatenwerten ist jedoch umständlich, da immer mehrere Werte benötigt werden. Ein weitaus gravierenderer Nachteil dieser Möglichkeit, Schaltvorgänge auszulösen, besteht jedoch darin, daß numerisch gesteuerte Systeme über mehrere Möglichkeiten der Bahngenerierung zwischen zwei Punkten verfügen. Neben der bereits angesprochenen koordinatenbezogenen Bahnbewegung, die auch als Continuous Path (CP)-Bewegung bezeichnet wird, gibt es beispielsweise eine Punkt-zu-Punkt (PTP)- und eine Überschleif(UE)-Bewegung. Bei der Punkt-zu-Punkt-Bewegung werden die Achsen des numerisch gesteuerten Systems so verfahren, daß der Zielpunkt mit der für jede Achse kleinsten Winkeländerung angefahren wird. Die vom Werkzeug abgefahrene Bahn zwischen zwei Punkten einer Punkt-zu Punkt-Bahnbewegung ist damit zum einen nicht notwendigerweise eine Gerade, zum anderen ist sie nicht in Koordinaten bekannt. Damit kann auch kein Schaltvorgang bei einem bestimmten Koordinatenwert ausgelöst werden. Das gleiche gilt für Überschleifbahnbewegungen, bei denen von der numerischen Steuerung einzelne Bewegungssätze durch eine Überschleifkontur so miteinander verbunden werden, daß die Bewegungen des Werkzeuges von einem zum anderen Bewegungssatz stetig ineinander übergehen.

Eine weitere Schwierigkeit, einen definierten Schaltpunkt festzulegen, besteht darin, daß die Istwerte der Werkzeugposition des numerisch gesteuerten Systems von den von der numerischen Steuerung berechneten Sollwerten um einen Schleppabstand differieren. Dieser Schleppabstand ist umso größer, je größer die Bahngeschwindigkeit ist.

Aus der DE-A-41 01 422 ist ein Verfahren zum Auslösen von Schaltvorgängen während eines von einem Roboter oder einer Werkzeugmaschine ausgeführten Bearbeitungsganges bekannt. Hat der Roboter einen bestimmten Weg zurückgelegt, so wird ein Schaltvorgang ausgelöst, wenn die Daten, die den Weg des Roboters festlegen den Daten entsprechen, die für die Schaltposition festgelegt sind. Dabei ist es jedoch nicht möglich, einer Bewegungsfunktion, aus der auch die Verfahrparameter abgeleitet werden, einen istwertbezogenen Bahnparameter zu generieren, so daß der Bediener auf einfache Weise auch über mehrere Verfahrabschnitte hinweg die entsprechenden Schaltvorgänge vorgeben und überwachen kann.

Einen technischen Hintergrund zur vorliegenden Erfindung zeigt die DE-A-23 34 455. Dort wird bei einem numerisch gesteuerten Antriebssystem ständig die Istgeschwindigkeit erfaßt. Es erfolgt jedoch keine Istwerterfassung der Geschwindigkeit, Position etc..

Aus der Literaturstelle Patent Abstracts of Japan, Vol.9, No.250 (p.394) (1973), 8. Oktober 1985 & JP-A-60 101 606 ist ferner ganz allgemein das "teachen" von Robotern bekannt.

Es ist deshalb Aufgabe der Erfindung, ein Verfahren zum Auslösen von Schaltvorgängen während eines von einem Roboter oder einer Werkzeugmaschine ausgeführten Bearbeitungsvorganges zu schaffen, das ein definiertes Auslösen des Schaltvorganges bei allen Verfahrbewegungen ermöglicht.

Diese Aufgabe wird durch ein Verfahren zum Auslösen von positionsbezogenen Schaltvorgängen während eines von einem Roboter oder einer Werkzeugmaschine ausgeführten Bearbeitungsvorganges mit folgenden Merkmalen gelost:

1.1 Von der numerischen Steuerung des Roboters oder der Werkzeugmaschine wird für jeden Verfahrabschnitt aus einer vorgegebenen Bewegungsfunktion - aus der auch die Sollwerte der Verfahrkomponenten, z.B. Positionssollwerte, berechnet werden - ein istwertbezogener prognostizierter Bahnparameter abgeleitet, dessen Wert innerhalb eines Verfahrabschnittes mit der jeweiligen Position des Werkzeuges vom Anfangspunkt bis zum Endpunkt des jeweiligen Verfahrabschnittes monoton steigt oder fällt,

1.2 wenn der istwertbezogene prognostizierte Bahnparameter einen vorgegebenen Wert erreicht hat, ist über die numerische Steuerung ein Schaltvorgang auslösbar.

Ein solcher istwertbezogener Bahnparameter könnte beispielsweise eine Funktion der Zeit sein. Vorteilhafterweise ist diese Funktion je Verfahrabschnitt proportional zum Weg, so daß der Schaltvorgang unabhängig von der Geschwindigkeit an der gleichen Position ausgeführt wird. Es ist weiterhin vorteilhaft, wenn es sich dabei um einen nur eindimensionalen prognostizierten Bahnparameter handelt und wenn dieser während des Betriebes des Roboters oder der Werkzeugmaschine angezeigt wird. Der Anwender kann dann den jeweiligen prognostizierten Bahnparameter an der gewünschten Stelle der geteachten Werkzeugposition ablesen und der numeriscnen Steuerung für den Frogrammbetrieb eingeben. Dabei ist es besonders vorteilhaft, wenn der Bahnparameter am geteachten Punkt durch Auslösen eines Signals, beispielsweise durch Knopfdruck, direkt für den Programmbetrieb in die Robotersteuerunq übernommen werden könnte.

Nach einer vorteilhaften Ausbildung der Erfindung ist der Schaltvorgang um einen vorgebbaren Zeitabschnitt vor oder nach Erreichen des vorgegebenen Wertes des istwertbezogenen prognostizierten Bahnparameters auslösbar. Diese Ausbildung der Erfindung bietet sich dann an, wenn vor Erreichen der eigentlichen Schaltposition bzw. der Bearbeitungsposition der Schaltvorgang bereits ausgelöst werden soll. Dies ist beispielsweise dann der Fall, wenn als Werkzeug eine Klebepistole verwendet wird, die eine gewisse Aufheizzeit zum Verflüssigen des Klebers oder einen bestimmten Vorlauf benötigt, damit der Kleber genau dann an der Klebespitze austritt, wenn der Klebevorgang ausgeführt werden soll.

Nach einer weiteren besonders vorteilhaften Ausbildung der Erfindung wird aus einer Bewegungsfunktion eines Verfahrabschnittes ein Sollbahnparameter nach der Beziehung $F_S(t)=K \cdot F_B(t)$ abgeleitet, wobei durch den Faktor K eine Normierung eines ]eweiligen Verfahrabschnittes derart durchgeführt wird, daß der Sollbahnparameter für unterschiedliche Verfahrabschnitte vergleichbar ist.

Als Bewegungsfunktionen $F_B$ werden steuerungsinterne Funktionen, die den Bewegungs- und somit auch den Geschwindigkeitsverlauf bestimmen, bezeichnet. So kann beispielsweise bei CP-Bewegungen der translatorische Weg und die Orientierung aus getrennten oder auch aus einer einzigen entsprechend normierten Bewegungsfunktion $F_B$ abgeleitet werden.

Bei PTP-Bewegungen können die axialen Sollwerte aus einer normierten Bewegungsfunktion abgeleitet werden oder wenn cie axialen Sollwertänderungen nicht proportional zueinander sind, wird je Achse eine eigene Bewegungsfunktion berechnet. Dies hängt von der Ausführungsform der Steuerung ab. Jede Bewegungssteuerung, die kontinuierliche Sollwerte generiert, ermittelt somit je Bewegungsart eine oder mehrere Bewegungsfunktionen, die unnormiert oder normiert sind. Jede Bewegungsfunktion stellt somit eine Funktion der Zeit dar. Sie kann direkt oder mit einer eigenen Normierung als Bahnparameter verwendet werden. Vorteilhafterweise wird eine Normierung der für den istwertbezogenen prognostizierten Bahnparameter ausgewählten Bewegungsfunktion so durchgeführt, daß dieser Bahnparameter über alle Verfahrabschnitte vergleichbar ist.

Wird eine Bewegung aus mehreren Bewegungsfunktionen $F_B$ berechnet, so wird vorteilhafterweise die Funktion, die die Verfahrzeit bestimmt, verwendet. Der Istwert der Bahnparameter (im folgenden auch als Ist-Bahnparameter bezeichnet) läßt sich dabei auf einfache Weise aus der Differenz zwischen dem Sollwert des Bahnparameters (im folgenden auch als Soll-Bahnparameter bezeichnet) und einem Differenzwert zwischen Ist- und Soll-Bahnparameter ermitteln, der sich aus der Ableitung des Soll-Bahnparameters nach der Zeit, multipliziert mit der sich ergebenden Winkeldifferenz einer Achse, dividiert durch die Sollwinkelgeschwindigkeit dieser Achse, ergibt.

Weitere vorteilhafte Ausbildungen des Verfahrens sind in weiteren Unteransprüchen definiert.

Ein Ausführungsbeispiel der Erfindung wird im folgenden anhand einer Zeichnung näher erläutert. Dabei zeigen:

Fig. 1     einen Teil eines Roboterarms in einem kartesischen Koordinatensystem,

Fig. 2     einen Roboterarm, der sich auf einer Bahnkurve bewegt

Fig. 3     eine Bahnkurve aus mehreren zusammengesetzten Verfahr fahrabschnitten,

Fig. 4     ein Geschwindigkeitsprofil einer Bewegungsfunktion

Fig. 5     den Verlauf einer Bewegungsfunktion.

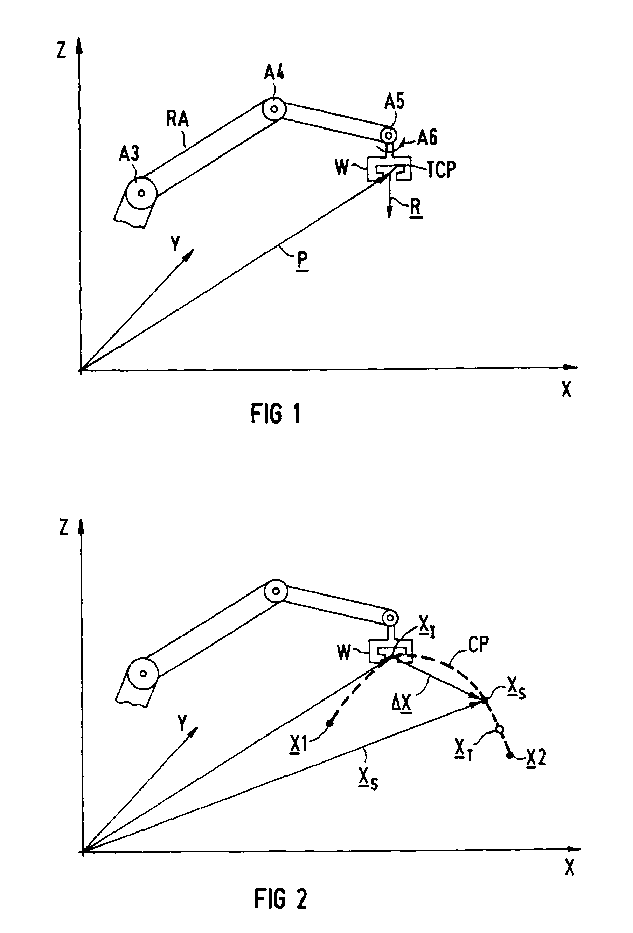

Fig. 1 zeigt einen teilweise dargestellten Roboterarm mit den Achsen A3, A4, A5 und A6 und dem Werkzeug W. Der Zugriffspunkt des Werkzeugs W ist als tool centre point TCP bezeichnet. Die Koordinaten des tool centre points TCP sind durch die Vektoren $\underline{P}$ und $\underline{R}$ angegeben. Dabei wird durch den Vektor $\underline{P}$ der eigentliche Raumpunkt im kartesischen Koordinatensystem (oder in einem beliebigen anderen Koordinatensystem) angegeben. Der Vektor $\underline{R}$ kennzeichnet die Orientierung des Roboterwerkzeuges W. Die Lage des tool centre points TCP läßt sich somit durch einen Vektor $\underline{X}$ beschreiben, der die kartesischen Koordinaten X, Y, Z und die - nicht dargestellten, dem Fachmann jedoch bekannten - Orientierungswinkel A, B, C beinhaltet.

$$\underline{X} = (X, Y, Z, A, B, C)^T$$

X, Y, Z, A, B, C stellen bei CP-Bewegungen jeweils eine Verfahrkomponente dar.

In Fig. 2 ist ein Verfahrabschnitt einer Bahnkurve dargestellt, auf dem sich der Werkzeugmittelpunkt TCP von der Position $\underline{X}1$ zur Position $\underline{X}2$ bewegen soll; es handelt sich also um einen kartesischen bzw. continuous path-Verfahrabschnitt, d.h. zu jeder von der numerischen Steuerung berechneten Interpolationsposition sind die kartesischen Koordinaten und die Orientierung des Werkzeugs W, also der Vektor $\underline{X}$ bekannt.

An der durch einen Kreis gekennzeichneten Position $\underline{X}_T$ des Verfahrabschnittes CP soll ein Schaltvorgang ausgelöst werden. Beispielsweise könnte an dieser Position Klebematerial durch eine an der Roboterhand angebrachte Klebepistole aufgebracht werden. Dazu könnte zwar der von der numerischen Steuerung berechnete und ausgegebene Sollwert $\underline{X}_S$ verwendet werden. Da jedoch der eigentliche Istwert $\underline{X}_I$ abhängig von der Geschwindigkeit ist, mit der das Werkzeug W entlang des Verfahrabschnittes von der Position $\underline{X}1$ zur Position $\underline{X}2$ bewegt wird und damit um einen größeren oder kleineren Wert delta $\underline{X}$ von der Sollposition $\underline{X}_S$ abweicht, würde der eigentliche Schaltvorgang bereits vor Erreichen der Klebeposition $\underline{X}_T$ ausgelöst werden.

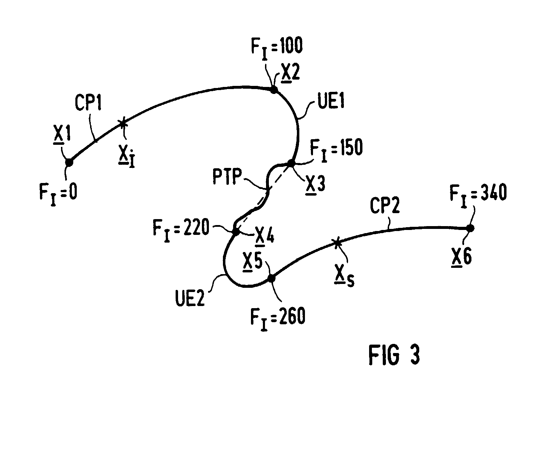

Der Positionsistwert $\underline{X}_I$ des Roboterwerkzeuges W kann aber nicht nur, wie in Fig. 2 gezeigt, innerhalb eines Verfahrabschnittes CP hinter dem Positionssollwert $\underline{X}_S$ zurückbleiben, sondern er kann auch mehrere Verfahrabschnitte zurückliegen. Dieser Sachverhalt wird im folgenden anhand der Fig. 3 näher erläutert.

Fig. 3 zeigt die Aneinanderreihung mehrerer Verfahrabschnitte CP1, UE1, PTP, UE2, CP2 zwischen den Positionen $\underline{X}1$ bis $\underline{X}6$. Bei den Verfahrabschnitten CP1 und CP2 zwischen den Positionen $\underline{X}1$ und $\underline{X}2$ bzw. $\underline{X}5$ und $\underline{X}6$ handelt es sich um kartesische oder continuous path-Bahnabschnitte. Bei diesen Verfahrabschnitten sind zu jedem Interpolationstakt die kartesischen Koordinaten des Roboterwerkzeuges bzw. des Werkzeugmittelpunkts TCP bekannt. Bei den Verfahrabschnitten UE1 und UE2 zwischen den Positionen $\underline{X}2$ und $\underline{X}3$ bzw. $\underline{X}4$ und $\underline{X}5$ handelt es sich um Überschleifverfahrabschnitte, die die Verfahrabschnitte CP1 und PTP bzw. PTP und CP2 stetig miteinander verbinden. Bei diesen Verfahrabschnitten sind die kartesischen Koordinaten des Werkzeugmittelpunktes nicht bekannt, da lediglich ein optimales Überschleifen zwischen zwei Verfahrabschnitten erreicht werden soll. Auch bei dem Verfahrabschnitt PTP zwischen den Positionen $\underline{X}3$ und $\underline{X}4$ sind die kartesischen Koordinaten auf der Bahn zwischen den genannten Positionen nicht bekannt. Bei dieser Punkt-zu-Punkt-Bewegung steht eine optimale Steuerung im Roboter-Koordinatensystem im Vordergrund, d. h. die Achsen werden so verfahren, daß der Punkt $\underline{X}4$ vom Punkt $\underline{X}3$ aus auf dem für die Achswinkelstellungen kürzesten Weg erreicht wird. Für den Verfahrabschnitt PTP ergibt sich damit in der Regel nicht die gestrichelt gezeichnete kürzeste Verbindung zwischen den Positionen $\underline{X}3$ und $\underline{X}4$, sondern das Roboterwerkzeug könnte beispielsweise die mit einer durchgezogenen Linie gezeichnete, geschwungene Bahn abfahren. Für den Überschleifverfahrabschnitt UE2 und den Verfahrabschnitt PT2 gilt das zum Überschleifabschnitt UE1 und zum Verfahrabschnitt CP1 Ausgeführte entsprechend.

Bei der Bahnbewegung gemäß Fig. 3 liegt der Positionsistwert $\underline{X}_I$ vier Verfahrabschnitte hinter dem Positionssollwert $\underline{X}_S$ zurück. Daraus ist ersichtlich, daß der zum Auslösen einer Schaltfunktion benötigte Bahnparameter $F_I$ innerhalb der einzelnen Verfahrabschnitte vergleichbar sein muß, damit ein einheitlicher Wert über die vier zurückliegenden Verfahrabschnitte gefunden werden kann. Würde der Bahnparameter $F_I$ beispielsweise im Verfahrabschnitt CP1 in kartesischen Koordinaten angegeben werden, so würde ein Fortführen des Bahnparameterwertes $F_I$ im darauffolgenden Überschleifsatz UE1 nicht mehr möglich sein, da, wie bereits ausgeführt, die kartesischen Koordinaten in diesem Überschleifsatz nicht bekannt sind. Dies gilt auch für die darauffolgenden Sätze PTP und UE2. Von der numerischen Steuerung wird deshalb ein innerhalb der verschiedenen Verfahrabschnitte vergleichbarer eindimensionaler und istwertbezogener Bahnparameter $F_I$ berechnet, dessen Wert innerhalb eines Verfahrabschnittes monoton steigt oder fällt. Die Stetigkeitsbedingung muß eingehalten werden, damit innerhalb eines Verfahrabschnittes keine Mehrdeutigkeiten entstehen. Der Bahnparameter $F_I$ könnte also beispielsweise am Beginn $\underline{X}1$ des Verfahrabschnittes CP1 den Wert Null haben und am Ende $\underline{X}2$ den Wert 100 aufweisen. Im Verfahrabschnitt UE1 könnte der Bahnparameter $F_I$ vom Wert 100 bis zum Wert 150 an der Position $\underline{X}3$ steigen usw. Die Werte des Bahnparameters an den Positionen $\underline{X}4$, $\underline{X}5$ und $\underline{X}6$ könnten die Werte $F_I$ = 220, 260, 340 einnehmen. Der Bahnparameter $F_I$ kann auch am Beginn eines Verfahrabschnittes, also beispielsweise an der Position $\underline{X}1$, auf den Wert 100 gesetzt werden und dann bis zur Position $\underline{X}2$ bis zum Wert Null abnehmen. Der Wert des Bahnparameters $F_I$ bei einem neuen Verfahrabschnitt muß auch nicht notwendigerweise mit dem Wert des Bahnparameters $F_I$ am Ende des vorhergehenden Verfahrabschnittes beginnen. Wie bereits oben erwähnt, ist das wichtigste Kriterium für den Bahnparameter, daß er über die verschiedenen Verfahrabschnitte vergleichbar ist.

Ein eindimensionaler Bahnparameter $F_I$ kann aus einer Bewegungsfunktion $F_B(t)$ des numerisch gesteuerten Systems abgeleitet werden. Dabei wird jeweils die Bewegungsfunktion, die die Bewegungszeit bestimmt, verwendet.

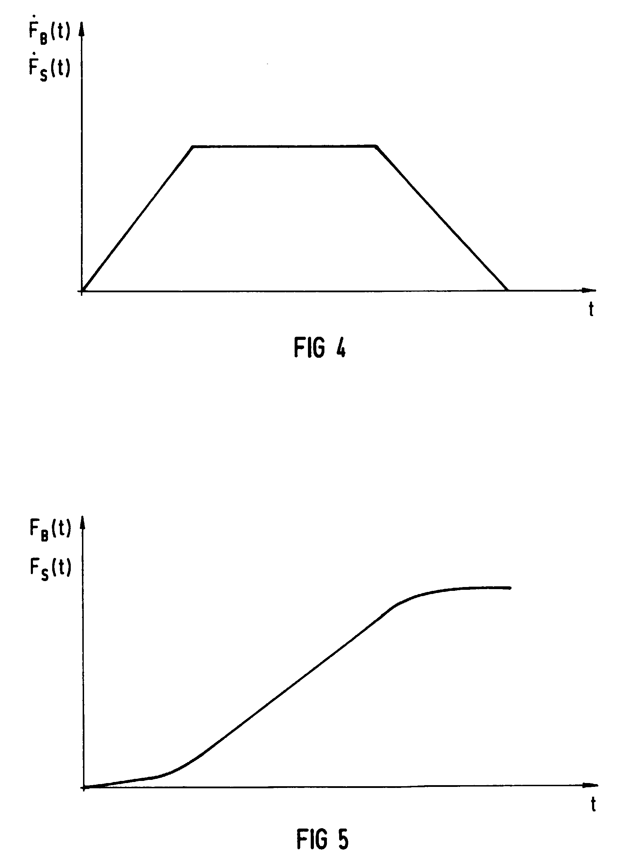

In Fig. 4 ist das Geschwindigkeitsprofil $\dot{F}_B(t) = dF_B(t)/dt$ einer Bewegungsfunktion gezeigt. Bei CP-Bewegungen ist es direkt proportional zur Bahngeschwindigkeit. Dieses Geschwindigkeitsprofil wird von der numerischen Steuerung für jeden Verfahrabschnitt berechnet. Der in Fig. 5 dargestellte Verlauf des Bahnparameters $F_B(t)$ ergibt sich durch Integration der Geschwindigkeitsfunktion $\dot{F}_B(t)$.

Bei CP-Bewegungen wird der Vektor $\underline{X}_S$ der Verfahrkomponenten aus einer einzigen Bewegungsfunktion $F_B(t)$ nach Gleichung (1) berechnet.

$$\underline{X}_S = (X, Y, Z, A, B, C)^T = \underline{G}_S (F_B(t)) \qquad (1)$$

Dabei ist $\underline{G}_S$ der Vektor, der die Verfahrkomponenten berechnenden Geometriefunktionen.

Als Soll-Bahnparameter $\underline{F}_S$ wird nun die normierte Bewegungsfunktion verwendet (Gleichung (2)).

$$F_S(t) = K \cdot F_B(t) \qquad (2)$$

Mit dem Normierungsfaktor K läßt sich $F_S$ so normieren, daß es über alle Verfahrabschnitte vergleichbar ist.

Bei PTP-Bewegungen entsprechen die Verfahrkomponenten den Sollwinkeln $a_{lS}$ der Achse $l = 1...n$. Sie werden aus einer oder mehreren Bewegungsfunktionen berechnet. Die Bewegungsfunktion $F_B(t)$, die die Verfahrzeit bestimmt, wird gemäß Gleichung (2) für die Berechnung des SollBahnparameters herangezogen.

Den Verlauf der Geschwindigkeit des Soll-Bahnparameters $\dot{F}_S(t)$ zeigt Bild 4, den Verlauf des Soll-Bahnparameters $F_S(t)$ zeigt Bild 5.

Der Ist-Bahnparameter $F_I(t)$ kann bei bekannter Verzögerung $T_{ea}$ zwischen den Sollwinkeln $a_{lS}$ und den Istwinkeln $a_{lI}$ mit einem PT1-Glied der Zeitkonstanten $T_{ea}$ ermittelt werden. Liegt $F_S(t)$ analytisch vor, so kann $F_I$ ferner gemäß

$$F_I(t) = F_S(t - T_{ea}) \qquad (3)$$

ermittelt werden.

Ist $T_{ea}$ nicht bekannt, läßt sich mit guter Näherung $F_I(t)$ aus

$$\text{delta } F = \frac{dF_s}{dt} \cdot (a_{Sl} - a_{lI})/(da_{lS}/dt) \qquad (4)$$

zu

$$F_I(t) = F_S(t) - \text{delta } F \qquad (5)$$

berechnen.

Für die Auswertung der Gleichung (4) wird vorteilhafterweise die Achse $l$ mit der größten Sollgeschwindigkeit $da_{lS}/dt$ herangezogen.

Bei konstanter Sollgeschwindigkeit $(da_{lS}/dt)$ läßt sich $T_{ea}$ gemäß

$$T_{ea} = (a_{Sl} - a_{lI})/(da_{lS}/dt) \qquad (6)$$

ermitteln.

Der Ist-Bahnparameter wird nun von der numerischen Steuerung zu jedem Zeitpunkt berechnet und kann beispielsweise während des teachens des Roboters auf einem Display oder einer anderen Anzeigevorrichtung angezeigt werden. Bei einer bestimmten Position $\underline{X}$ kann der Anwender den Wert des Bahnparameters $F_I$ ablesen und in die numerische Steuerung für den Programmbetrieb eingeben. Im Programmbetrieb wird dann der Schaltvorgang bei Erreichen des vorgegebenen Wertes des Ist-Bahnparameters ausgelöst.

Soll der Schaltvorgang um eine Zeit $T_V$ vor Erreichen des Ist-Bahnparameters ausgelöst werden, so ist mit

$$F_I(t + T_V) = F_S(t - T_{ea} + T_V)$$

zum Zeitpunkt t der Wert des Ist-Bahnparameters, den er zum Zeitpunkt $t + T_V$ haben wird, zu prognostizieren und der Schaltvorgang dann auszulösen, wenn der prognostizierte Ist-Bahnparameter den vorgegebenen Wert erreicht hat.

Soll der Schaltvorgang um eine Zeit $T_d$ nach Erreichen des Ist-Bahnparameters ausgelöst werden, so ist die Ausgabe des Schaltvorganges lediglich um die Zeit $T_d$ nach Erreichen des vorgegebenen Wertes zu verzögern.

## Patentansprüche

1. Verfahren zum Auslösen von positionsbezogenen Schaltvorgängen während eines von einem Roboter oder einer Werkzeugmaschine ausgeführten Bearbeitungsvorganges mit folgenden Merkmalen:

   1.1 Von der numerischen Steuerung des Roboters oder der Werkzeugmaschine wird für jeden Verfahrabschnitt (CP,PTP,UE1,UE2) aus einer vorgegebenen Bewegungsfunktion ($F_B$) - aus der auch die Sollwerte der Verfahrkomponenten, z.B. Positionssollwerte, berechnet werden - ein istwertbezogener prognostizierter Bahnparameter ($F_I$) abgeleitet, dessen Wert innerhalb eines Verfahrabschnittes mit der jeweiligen Position des Werkzeuges vom Anfangspunkt (X1) bis zum Endpunkt (X2) des jeweiligen Verfahrabschnittes (CP, PTP, UE1, UE2) monoton steigt oder fällt,
   1.2 wenn der istwertbezogene prognostizierte Bahnparameter ($F_I$) einen vorgegebenen Wert erreicht hat, ist über die numerische Steuerung ein Schaltvorgang auslösbar.

2. Verfahren nach Anspruch 1, wobei der Wert des istwertbezogenen prognostizierten Bahnparameters ($F_I$) des Roboters oder der Werkzeugmaschine angezeigt wird.

3. Verfahren nach Anspruch 1 oder 2, wobei der jeweils vorzugebende Wert des istwertbezogenen prognostizierten Bahnparameters ($F_I$) an einer beim "teachen" des Roboters oder der Werkzeugmaschine angefahrenen Position ($\underline{X}$) durch Auslösen eines Signals automatisch in die Steuerung übernommen wird.

4. Verfahren nach einem der vorstehenden Ansprüche, wobei der Schaltvorgang um einen vorgebbaren Zeitabschnitt (T) vor oder nach Erreichen des vorgegebenen Wertes des istwertbezogenen prognostizierten Bahnparameters ($F_I$) auslösbar ist.

5. Verfahren nach einem der vorstehenden Ansprüche, wobei aus einer Bewegungsfunktion ($F_B$) eines Verfahrabschnittes ein Soll-Bahnparameter ($F_S$) abgeleitet wird nach der Beziehung

$$F_S(t) = K \bullet F_B(t),$$

wobei durch den Faktor K eine Normierung eines jeweiligen Verfahrabschnittes (CP,PTP,UE1,UE2) derart durchgeführt wird, daß der Soll-Bahnparameter ($F_B$(t)) für unterschiedliche Verfahrabschnitte vergleichbar ist.

6. Verfahren nach Anspruch 5, wobei der istwertbezogene prognostizierte Bahnparameter ($F_I$) aus der Beziehung

$$F_I = F_S - \Delta F$$

mit

$$\Delta F = (dF_S/dt) \bullet \Delta a_I/(da_{IS}/dt)$$

gewonnen wird, wobei $\Delta a_I$ die Differenz zwischen Soll- und Istwinkel einer Roboter- oder Werkzeugmaschinenachse und $da_{IS}/dt$ die Sollgeschwindigkeit ist.

7. Verfahren nach Anspruch 5, wobei der istwertbezogene prognostizierte Bahnparameter ($F_I$) aus dem Soll-Bahnparameter ($F_B$) durch ein PT1-Glied mit der Zeitkonstanten

$$T_{ea} = \Delta a_I/(da_{IS}/dt)$$

berechnet wird.

8. Verfahren nach Anspruch 5, wobei der istwertbezogene prognostizierte Bahnparameter ($F_I$) aus der Beziehung

$$F_I(t) = F_S (t - T_{ea})$$

berechnet wird und $T_{ea}$ die Verzögerungszeit zwischen Soll- und Istwinkeln ist.

9. Verfahren nach Anspruch 5, wobei eine Verschiebung des Schaltvorganges um einen vorgebbaren Zeitabschnitt T mit

$$F_I(t+T) = F_S(t - T_{ea} + T)$$

vor Erreichen des vorgegebenen Istwertes des istwertbezogenen prognostizierten Bahnparameters ($F_I$) auslösbar ist.

**Claims**

1. Method for triggering position-related switching operations during a machining process carried out by a robot or a machine tool, having the following features:

  1.1 for each travel section (CP, PTP, UE1, UE2) an actual-value-related prognosticated path parameter ($F_I$) is derived by the numerical control of the robot or of the machine tool from a predetermined motional function ($F_B$) - from which the desired values of the travel components, e.g. desired position values, are also calculated - the value of which path parameter ($F_I$) within a travel section rises or falls monotonically with the respective position of the machine tool from the starting point (X1) to the end point (X2) of the respective travel section (CP, PTP, UE1, UE2),

  1.2 if the actual-value-related prognosticated path parameter ($F_I$) has reached a predetermined value, a switching operation can be triggered by way of the numerical control.

2. Method according to claim 1, wherein the value of the actual-value-related prognosticated path parameter ($F_I$) of the robot or of the machine tool is displayed.

3. Method according to claim 1 or 2, wherein the value of the actual-value-related prognosticated path parameter ($F_I$) at a position ($\underline{X}$) which is approached when "teaching" the robot or the machine tool, which value is to be predetermined in each case, is automatically taken over into the control by triggering a signal.

4. Method according to one of the preceding claims, wherein the switching operation can be triggered at a predeterminable time period (T) before or after the predetermined value of the actual-value-related prognosticated path parameter ($F_I$) is reached.

5. Method according to one of the preceding claims, wherein a desired path parameter ($F_S$) is derived from a motional function ($F_B$) of a travel section, according to the relation

$$F_S(t) = K \bullet F_B(t),$$

wherein a respective travel section (CP, PTP, UE1, UE2) is scaled by the factor K in such a way that the desired path parameter ($F_B$(t)) can be compared for various travel sections.

6. Method according to claim 5, wherein the actual-value-related prognosticated path parameter ($F_I$) is obtained from the relation

$$F_I = F_S - \Delta F$$

with

$$\Delta F = (dF_S/dt) \bullet \Delta a_I/(da_{IS}/dt),$$

wherein $\Delta a_I$ is the difference between desired angle and actual angle of a robot axis or machine tool axis and $da_{IS}/dt$ is the desired speed.

7. Method according to claim 5, wherein the actual-value-related prognosticated path parameter ($F_I$) is calculated from the desired path parameter ($F_B$) by a PT1-member having the time constants

$$T_{ea} = \Delta a_I/(da_{IS}/dt).$$

**8.** Method according to claim 5, wherein the actual-value-related prognosticated path parameter ($F_I$) is calculated from the relation

$$F_I(t) = F_S (t - T_{ea}),$$

and $T_{ea}$ is the time delay between desired angle and actual angle.

**9.** Method according to claim 5, wherein a shift of the switching operation can be triggered at a predeterminable time period T with

$$F_I(t+T) = F_S(t-T_{ea}+T)$$

before the predetermined actual value of the actual-value-related prognosticated path parameter ($F_I$) is reached.

**Revendications**

**1.** Procédé de déclenchement d'opérations de manoeuvres, qui sont fonction de la position, pendant une opération d'usinage effectué par un robot ou par une machine-outil, ayant les particularités suivantes :

1.1 on obtient, par la commande numérique du robot ou de la machine-outil, pour chaque partie (CP,PTP,UE1,UE2) de course, à partir d'une fonction prescrite ($F_B$) de mouvement, à partir de laquelle on calcule également les valeurs de consigne des composantes de déplacement, par exemple des valeurs de consigne de position, un paramètre ($F_I$) de trajectoire pronostiqué, qui est fonction d'une valeur réelle et dont la valeur croît ou décroît de manière monotone pendant une partie de course en fonction de la position respective de l'outil, du point (X1) de début au point (X2) de fin de la partie respective (CP,PTP,UE1,UE2) de course,

1.2 lorsque le paramètre ($F_I$) de trajectoire pronostiqué, qui est fonction d'une valeur réelle, a atteint une valeur prescrite, on peut déclencher, par l'intermédiaire de la commande numérique, une opération de manoeuvre.

**2.** Procédé suivant la revendication 1, dans lequel on affiche la valeur du paramètre ($F_I$) de trajectoire pronostiqué, qui est fonction d'une valeur réelle, du robot ou de la machine-outil.

**3.** Procédé suivant la revendication 1 ou 2, dans lequel on prend en charge automatiquement dans la commande, par déclenchement d'un signal, la valeur prescrite du paramètre ($F_I$) de trajectoire pronostiqué, qui est fonction d'une valeur réelle, en une position ($\underline{X}$) dans laquelle on passe lors de l'apprentissage du robot ou de la machine-outil.

**4.** Procédé suivant l'une des revendications précédentes, dans lequel on peut déclencher l'opération de manoeuvre un laps (T) de temps, pouvant être prescrit, avant ou après que la valeur prescrite du paramètre ($F_I$) de trajectoire pronostiqué et fonction d'une valeur réelle, soit ou est atteinte.

**5.** Procédé suivant l'une des revendications précédentes, dans lequel on obtient, à partir d'une fonction ($F_B$) de mouvement d'une partie de course, un paramètre ($F_S$) de trajectoire de consigne suivant la relation

$$F_S(t) = K \cdot F_B (t),$$

une normation de chaque partie (CP,PTP, UE1,UE2) de course par le facteur K étant effectuée, de telle sorte que l'on puisse comparer le paramètre ($F_B(t)$) de la trajectoire de consigne pour des parties différentes de course.

**6.** Procédé suivant la revendication 5, dans lequel on obtient le paramètre ($F_I$) de trajectoire pronostiqué et fonction d'une valeur réelle à partir de la relation

$$F_I = F_S - \Delta F$$

avec

$$\Delta F = (dF_S/dt) \cdot \Delta a_I/(da_{IS}/dt)$$

$\Delta a_I$ étant la différence entre l'angle de consigne et l'angle réel d'un axe de robot ou de machine-outil et $da_{IS}/dt$ étant la vitesse de consigne.

**7.** Procédé suivant la revendication 5, dans lequel on calcule le paramètre ($F_I$) de trajectoire pronostiqué et fonction d'une valeur réelle à partir du paramètre ($F_B$) de trajectoire de consigne par un élément PT1 ayant la constante de temps

$$T_{ea} = \Delta a_I/(da_{IS}/dt).$$

**8.** Procédé suivant la revendication 5, dans lequel on calcule le paramètre ($F_I$) de trajectoire pronostiqué et fonction d'une valeur réelle à partir de la relation

$$F_I(t) = F_S (t\ t\ T_{ea})$$

où $T_{ea}$ est le temps de retard entre l'angle de consigne et l'angle réel.

**9.** Procédé suivant la revendication 5, dans lequel on peut déclencher un retardement de l'opération de manoeuvre, d'un laps T de temps pouvant être prescrit avec

$$F_I(t+T) = F_S(t-T_{ea}+T)$$

avant que la valeur réelle prescrite du paramètre $(F_I)$ de trajectoire pronostiqué et fonction d'une valeur réelle soit atteinte.

FIG 1

FIG 2

FIG 3

$\dot{F}_B(t)$
$\dot{F}_S(t)$

t

**FIG 4**

$F_B(t)$
$F_S(t)$

t

**FIG 5**